# EUROPEAN PATENT APPLICATION

(11) **EP 3 057 060 A1**
(43) Date of publication of application: **17.08.2016**
(21) Application number: 14852397.0
(22) Date of filing: 17.03.2014
(51) Int. Cl.: G06Q 50/18

(54) **DIGITAL INFORMATION ANALYSIS SYSTEM, DIGITAL INFORMATION ANALYSIS METHOD, AND DIGITAL INFORMATION ANALYSIS PROGRAM**

(30) Priority: 11.10.2013 JP 2013213717
(71) Applicant: Ubic, Inc., Minato-ku, Tokyo 108-0075 (JP)
(72) Inventor: MORIMOTO Masahiro, Tokyo 108-0075 (JP); TAKEDA Hideki, Tokyo 108-0075 (JP); HANATANI Akiteru, Tokyo 108-0075 (JP)
(74) Representative: Klunker . Schmitt-Nilson . Hirsch
(86) International application number: PCT/JP2014/057067
(87) International publication number: WO 2015/052946

(57) **Abstract**

To provide a digital information analysis system, a digital information analysis method, and a digital information analysis program capable of evaluating the classification accuracy of a classifier.

A digital information analysis system 1 includes: a relevance information acquiring unit 14 for acquiring relevance information attached by a classifier to each of multiple pieces of digital information and indicative of relevance between the digital information and a predetermined specific matter; a relevance score calculating unit 16 for calculating, for each of the multiple pieces of digital information, a relevance score determined according to relevance between each of the multiple pieces of digital information and the predetermined specific matter; a ratio calculation unit 18 for calculating, for each predetermined range of relevance scores, a ratio of the number of pieces of relevance information, attached to the digital information included in the range, to the total number of pieces of digital information having the relevance scores included in each range; and a display unit 24 for displaying multiple blocks associated with each range by changing color based on the ratio.

## Description

### Technical Field

The present invention relates to a digital information analysis system, a digital information analysis method, and a digital information analysis program. Particularly, the present invention relates to a digital information analysis system, a digital information analysis method, and a digital information analysis program that contribute to the evaluation of classification accuracy of a classifier who classifies digital information.

### Background Art

Conventionally, a system has been known, in which recorded digital information is displayed, user-specific information indicating to which user among users included in user information each of multiple document files has relevance is set, the set user-specific information is set to be recorded in a storage unit, at least one or more users are specified, user-specific information corresponding to the specified users searches for set document files, additional information indicating whether or not the retrieved document files are related to a legal action through a display unit is set, and based on the additional information, the document files relevant to the legal action are output (for example, see Patent Document 1). According to the system described in Patent Document 1, only digital document information relating to specific persons can be extracted to reduce a workload of preparing evidentiary materials for the legal action.

### Citation List

### Patent Document

Patent Document 1: Japanese Patent Application Laid-Open No. 2012-181851

### Summary of the Invention

### Problem to be solved by the Invention

In such a system as described in Patent Document 1, it is considered that the classification accuracy can be improved since the classification results of a classifier who sets additional information for digital information are visually displayed.

Therefore, it is an object of the present invention to provide a digital information analysis system, a digital information analysis method, and a digital information analysis program capable of evaluating the classification accuracy of a classifier.

### Means for solving the Problem

In order to attain the above objective, the present invention provides a digital information analysis system including: a relevance information acquiring unit for acquiring relevance information attached by a classifier to each of multiple pieces of digital information and indicative of relevance between the digital information and a predetermined specific matter; a relevance score calculating unit for calculating, for each of the multiple pieces of digital information, a relevance score determined according to relevance between each of the multiple pieces of digital information and the predetermined specific matter; a ratio calculation unit for calculating, for each predetermined range of relevance scores, a ratio of the number of pieces of relevance information, attached to the digital information included in the range, to the total number of pieces of digital information having the relevance scores included in each range; and a display unit for displaying multiple blocks associated with each range by changing hue, brightness, or saturation based on the ratio.

In the above digital information analysis system, the relevance information can include first relevance information indicating that the digital information and the predetermined specific matter have relevance to each other, and second relevance information indicating that the digital information and the predetermined specific matter have no relevance to each other, and the ratio calculation unit can calculate the ratio based on the number of pieces of first relevance information.

Further, in the above digital information analysis system, the relevance information acquiring unit can acquire the relevance information in association with a classifier identifier for identifying the classifier, and the display unit displays the multiple blocks for each classifier identified by the classifier identifier.

Further, in the above digital information analysis system, an attaching-time measurement unit for measuring a time to attach the relevance information to one piece of digital information can further be included, and the display unit can display a classification rate calculated from the time for each classifier identified by the classifier identifier.

Further, in the above digital information analysis system, a block selection unit for selecting any of the multiple blocks can further be included, and the display unit can display the digital information having the relevance scores included in the range corresponding to the block selected by the block selection unit.

Further, in order to attain the above objective, the present invention provides a digital information analysis method including: a relevance information acquiring step of acquiring relevance information attached by a classifier to each of multiple pieces of digital information and indicative of relevance between the digital information and a predetermined specific matter; a relevance score calculating step of calculating, for each of the multiple pieces of digital information, a relevance score determined according to relevance between each of the multiple pieces of digital information and the predetermined specific matter; a ratio calculation step of calculating, for each predetermined range of relevance scores, a ratio of the number of pieces of relevance information, attached to the digital information included in the range, to the total number of pieces of digital information having the relevance scores included in each range; and a display step of displaying multiple blocks associated with each range by changing hue, brightness, or saturation based on the ratio.

Further, in order to attain the above objective, the present invention provides a digital information analysis program for causing a computer to realize: a relevance information acquiring function of acquiring relevance information attached by a classifier to each of multiple pieces of digital information and indicative of relevance between the digital information and a predetermined specific matter; a relevance score calculating function of calculating, for each of the multiple pieces of digital information, a relevance score determined according to relevance between each of the multiple pieces of digital information and the predetermined specific matter; a ratio calculation function of calculating, for each predetermined range of relevance scores, a ratio of the number of pieces of relevance information, attached to the digital information included in the range, to the total number of pieces of digital information having the relevance scores included in each range; and a display function of displaying multiple blocks associated with each range by changing hue, brightness, or saturation based on the ratio.

### Advantageous Effect of the Invention

According to the digital information analysis system, the digital information analysis method, and the digital information analysis program of the present invention, a digital information analysis system, a digital information analysis method, and a digital information analysis program capable of evaluating the classification accuracy of a classifier can be provided.

### Brief Description of the Drawings

FIG. 1 is a functional block diagram of a digital information analysis system according to an embodiment.
FIG. 2 is a display screen of the digital information analysis system according to the embodiment of the present invention.
FIG. 3 is a partial schematic diagram of the display screen of the digital information analysis system according to the embodiment of the present invention.
FIG. 4 is a flowchart of processing performed by the digital information analysis system according to the embodiment of the present invention.
FIG. 5 is a hardware configuration diagram of the digital information analysis system according to the embodiment.

### Mode for carrying out the Invention

### [Embodiment]

### (Outline of Digital Information Analysis System 1)

A digital information analysis system 1 according to an embodiment is a system for attaching relevance information, which indicates whether each digital information has relevance to a predetermined specific matter, to multiple pieces of digital information stored in an information processing apparatus 2 such as a user terminal or a server, and a system for visually displaying the classification accuracy of each classifier who attaches relevance information to show whether proper relevance information is attached to the digital information.

The predetermined specific matter is information indicative of being relevant to a lawsuit, for example. Then, the digital information analysis system 1 according to the embodiment can be applied to forensics as a technique in which, when a crime or a legal conflict related to computers occurs, such as unauthorized access or leakage of confidential information, digital information as electronic records required for investigation into the cause of the crime or the legal conflict is collected and analyzed to reveal the legal evidence thereof.

Further, in the embodiment, the server is one or more servers, which can also be configured to include multiple servers. For example, the servers include servers capable of storing digital information, such as e-mail servers, file servers, or document management servers. The user terminal is one or more user terminals, which can also be configured to include multiple user terminals. For example, the user terminals include portable communication terminals such as personal computers, laptop personal computers, tablet PCs, or cell-phones.

### (Details of Digital Information Analysis System 1)

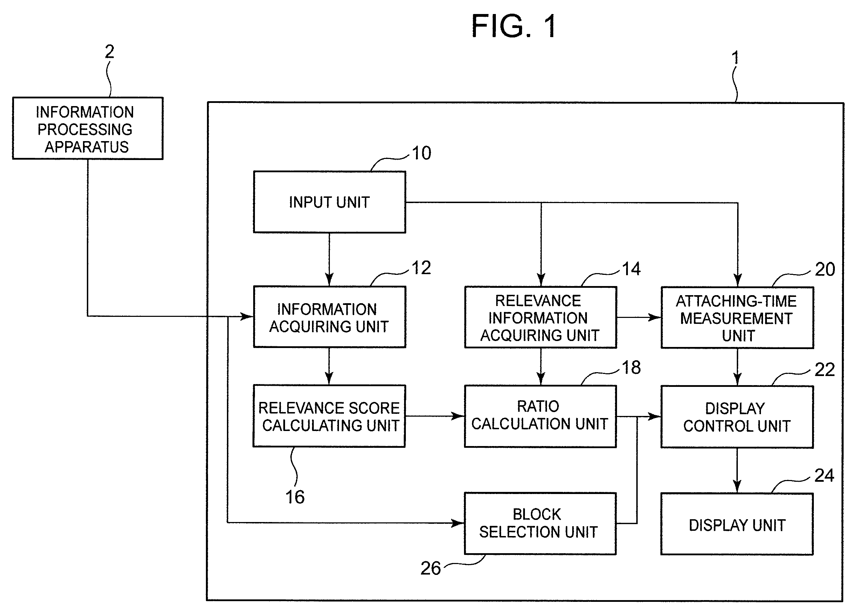

FIG. 1 shows an example of the functional block configuration of the digital information analysis system according to the embodiment.

The digital information analysis system 1 according to the embodiment includes an input unit 10 for accepting input from the outside, an information acquiring unit 12 for acquiring digital information stored in the information processing apparatus 2, a relevance information acquiring unit 14 for acquiring relevance information to be attached to digital information by a classifier, a relevance score calculating unit 16 for calculating a relevance score determined according to relevance between digital information and a predetermined specific matter, and a ratio calculation unit 18 for calculating, for each predetermined range of relevance scores, a ratio of the number of pieces of relevance information, attached to digital information included in each range, to the total number of pieces of digital information having relevance scores included in the range.

The digital information analysis system 1 further includes an attaching-time measurement unit 20 for measuring the time required for the classifier to attach relevance information, a display control unit 22 for controlling the display of a display unit 24 for displaying each predetermined range of relevance scores, and a block selection unit 26 for selecting any one of multiple blocks corresponding to each predetermined range of relevance scores.

For example, when digital information is a document file, the relevance score is a value indicative of relevance between the document and a predetermined specific matter. It shows that the larger the value of the relevance score, the higher the relevance between the digital information and the predetermined specific matter. The relevance score is calculated based on such as keywords or related terms included in digital information.

### (Information Processing Apparatus 2)

The information processing apparatus 2 has a digital information storing unit for storing multiple pieces of digital information and an information output unit for outputting digital information to the outside. The digital information storing unit stores multiple pieces of digital information such as document files including text information, text files, or e-mail. In response to a request from the information acquiring unit 12, the digital information storing unit supplies predetermined digital information to the information acquiring unit 12. The digital information analysis system 1 and the information processing apparatus 2 are connected to be communicable with each other through a communication network such as the Internet or a wired or wireless network such as a LAN. The digital information analysis system 1 can include part or the whole of the functions and configuration of the information processing apparatus 2.

### (Input Unit 10)

The input unit 10 accepts input from the outside in association with a classifier identifier for uniquely identifying a classifier. Specifically, the input unit 10 accepts the input of relevance information to be attached to digital information by the classifier in association with the classifier identifier, and the digital information (or a digital information identifier for uniquely identifying the digital information). Here, the relevance information includes first relevance information indicating that the digital information and a predetermined specific matter have relevance to each other, and second relevance information indicating that the digital information and the predetermined specific matter have no relevance to each other. The first relevance information is, for example, information indicating that the digital information is a "HOT document" bearing relation to the predetermined specific matter. The second relevance information is, for example, information indicating that the digital information is a "Non-HOT document" bearing no relation to the predetermined specific matter. The input unit 10 supplies the input relevance information to the relevance information acquiring unit 14 in association with the classifier identifier. The input unit 10 further supplies information, indicative of the time when the classifier starts inputting relevance information for one piece of digital information, to the attaching-time measurement unit 20 in association with the classifier identifier.

### (Information Acquiring Unit 12)

The information acquiring unit 12 acquires digital information from the information processing apparatus 2. Specifically, the information acquiring unit 12 acquires, from the information processing apparatus 2, digital information to which relevance information is to be attached by the classifier. For example, the information acquiring unit 12 acquires digital information from the information processing apparatus 2 based on the digital information identifier for identifying the digital information input to the input unit 10. The information acquiring unit 12 supplies the acquired digital information to the relevance score calculating unit 16 in association with the classifier identifier.

### (Relevance Information Acquiring Unit 14)

The relevance information acquiring unit 14 acquires, from the input unit 10, relevance information to be attached to each of the multiple pieces of digital information manually by the classifier. The relevance information acquiring unit 14 acquires relevance information in association with the classifier identifier. The relevance information acquiring unit 14 supplies relevance information to be attached to one piece of digital information to the ratio calculation unit 18 in association with the classifier identifier and the digital information identifier for the one piece of digital information. The relevance information acquiring unit 14 further supplies information, indicative of the time of acquiring the relevance information, to the attaching-time measurement unit 20 in association with the classifier identifier.

### (Relevance Score Calculating Unit 16)

The relevance score calculating unit 16 calculates, for each of the multiple pieces of digital information, a relevance score determined according to relevance between each of the multiple pieces of digital information and a predetermined specific matter. The relevance score calculating unit 16 automatically calculates the relevance score based on the content of the digital information. Specifically, the relevance score calculating unit 16 performs morphological analysis of text data and the like included in one piece of digital information. Then, the relevance score calculating unit 16 calculates a relevance score for one piece of digital information based on the correspondence relation between a predetermined specific matter and a morpheme having high relevance to the specific matter.

For example, the relevance score calculating unit 16 performs morphological analysis of text data included in the digital information. Then, the relevance score calculating unit 16 calculates the relevance score based on the evaluation value of each morpheme itself obtained by the morphological analysis, the number of morphemes included in the digital information, the appearance frequency of each morpheme in the digital information, the evaluation value of each related term included in the digital information, the number of related terms included in the digital information and/or the appearance frequency of each related term in the digital information. As an example, the relevance score calculating unit 16 calculates a higher relevance score as the evaluation value of a morpheme is larger, as the number of morphemes included in the digital information is larger, and as the appearance frequency of each morpheme in the digital information is higher. Similarly, the relevance score calculating unit 16 calculates a higher relevance score as the evaluation value of each related term included in the digital information is larger, as the number of related terms included in the digital information is larger, and as the appearance frequency of each related term in the digital information is higher.

Note that a related term is, for example, a morpheme the evaluation value of which is larger than or equal to a predetermined value among morphemes included in common in the multiple pieces of digital information associated with the first relevance information and the appearance frequencies of which are higher than or equal to a predetermined frequency. The appearance frequency means the proportion of included related terms to the total number of morphemes included in one piece of digital information. Note that the relevance score calculating unit 16 can include a database for morphemes having relevance to a predetermined specific matter. In this case, the relevance score calculating unit 16 can refer to the database to determine whether a morpheme has relevance to the predetermined specific matter. Then, the relevance score calculating unit 16 can calculate a relevance score using morphemes having relevance to the predetermined specific matter. The relevance score calculating unit 16 supplies the calculated relevance score to the ratio calculation unit 18.

### (Ratio Calculation Unit 18)

The ratio calculation unit 18 calculates, for each predetermined range of relevance scores, a ratio of the number of pieces of relevance information, attached to digital information included in each range, to the total number of pieces of digital information having relevance scores included in the range. For example, the ratio calculation unit 18 can calculate a ratio based on the number of pieces of first relevance information attached to digital information. Here, when relevance scores fall within a numeric range from "0 (zero)" to "X (X is a positive number of 1 or more)", the predetermined range of relevance scores is a range obtained by delimiting the numeric range at predetermined intervals. As an example, the predetermined range is each of multiple ranges obtained by delimiting the relevance scores at every 200 points. The numeric range for delimiting the relevance scores can be changed arbitrarily.

Specifically, the ratio calculation unit 18 calculates a ratio through the following processes: First, the ratio calculation unit 18 determines which of the first relevance information and the second relevance information is associated with the digital information based on information received from the relevance information acquiring unit 14. Further, the ratio calculation unit 18 figures out a relevance score for each piece of digital information based on information received from the relevance score calculating unit 16. Then, the ratio calculation unit 18 measures the total number of pieces of digital information included in one range of relevance scores. Next, among the pieces of digital information included in the one range of relevance scores, the ratio calculation unit 18 measures the number of pieces of digital information to which the first relevance information is attached. Then, the ratio calculation unit 18 divides the number of pieces of digital information, to which the first relevance information is attached, by the total number of pieces of digital information included in the one range of relevance scores to calculate a ratio in association with the classifier identifier.

As an example, a description will be provided for a case where the ratio calculation unit 18 calculates a ratio in a score range of relevance scores not less than 6200 points and less than 6400 points. The ratio calculation unit 18 measures the number of pieces of digital information (hereinafter referred to as "A") included in the range of relevance scores not less than 6200 points and less than 6400 points among the multiple pieces of digital information. Then, the ratio calculation unit 18 measures the number of pieces of digital information (hereinafter referred to as "B"), to which information indicative of "HOT document" is attached, among the pieces of digital information included in the range of relevance scores not less than 6200 points and less than 6400 points. Then, the ratio calculation unit 18 calculates the value of "B/A" as the ratio. The ratio calculation unit 18 supplies information indicative of the calculated ratio to the display control unit 22 in association with the score range in which the ratio is calculated, and the classifier identifier.

### (Attaching-Time Measurement Unit 20)

The attaching-time measurement unit 20 measures the time required for attaching relevance information to one piece of digital information. Specifically, the attaching-time measurement unit 20 measures the required time from a time point of receiving information indicative of the time when one classifier started inputting relevance information for one piece of digital information from the input unit 10 until a time point of receiving information indicative of the time when relevance information attached to the one piece of digital information has been acquired from the relevance information acquiring unit 14. The attaching-time measurement unit 20 measures the time required for attaching relevance information to each of the multiple pieces of digital information, respectively. Further, the attaching-time measurement unit 20 measures the time required for attaching relevance information in association with the classifier identifier. Then, the attaching-time measurement unit 20 calculates, for each classifier identifier, a rate of attaching relevance information on a classifier identified by the classifier identifier (e.g., the time required for attaching relevance information to one piece of digital information). The attaching-time measurement unit 20 supplies, to the display control unit 22, information indicative of the measured time and/or the calculated rate in association with the classifier identifier.

### (Display Control Unit 22 and Display Unit 24)

The display unit 24 displays multiple blocks associated with each predetermined range of relevance scores on a display device such as a display capable of displaying digital information. Specifically, the display unit 24 displays the multiple blocks by changing the hue, brightness, or saturation of each block based on information indicative of the ratio received by the display control unit 22 from the ratio calculation unit 18. Here, the display unit 24 displays the multiple blocks for each classifier identified by the classifier identifier. In other words, the display control unit 22 controls the display unit 24 to display each block in such a state that the hue, brightness, or saturation of the multiple blocks are changed according to the ratio received from the ratio calculation unit 18 for each of multiple classifiers. For example, the display control unit 22 displays each block by gradually changing the color of the block from a cold color to a warm color as the ratio increases from 0% to 100%.

Further, based on information received from the attaching-time measurement unit 20 for each classifier identified by the classifier identifier, the display unit 24 displays a classification rate as a rate of each classifier to classify digital information. The display unit 24 displays a classification rate calculated from information indicative of the measured time received from the attaching-time measurement unit 20 together with the multiple blocks. When displaying the classification rate, the display unit 24 can display the classification rate in the form of a graph by choosing the abscissa as the time axis and the ordinate as the axis of classification rate. Here, the time span on the time axis can be changed arbitrarily.

### (Block Selection Unit 26)

The block selection unit 26 selects any one of the multiple blocks associated with each predetermined range of relevance scores according to an instruction from the outside. The display control unit 22 controls the display unit 24 to display digital information having relevance scores included in a score range corresponding to the block selected by the block selection unit 26. This enables the digital information analysis system 1 to display the content of digital information included in each of the multiple blocks displayed on the display unit 24.

### (Outline of Display Screen 260 of Digital Information Analysis System 1)

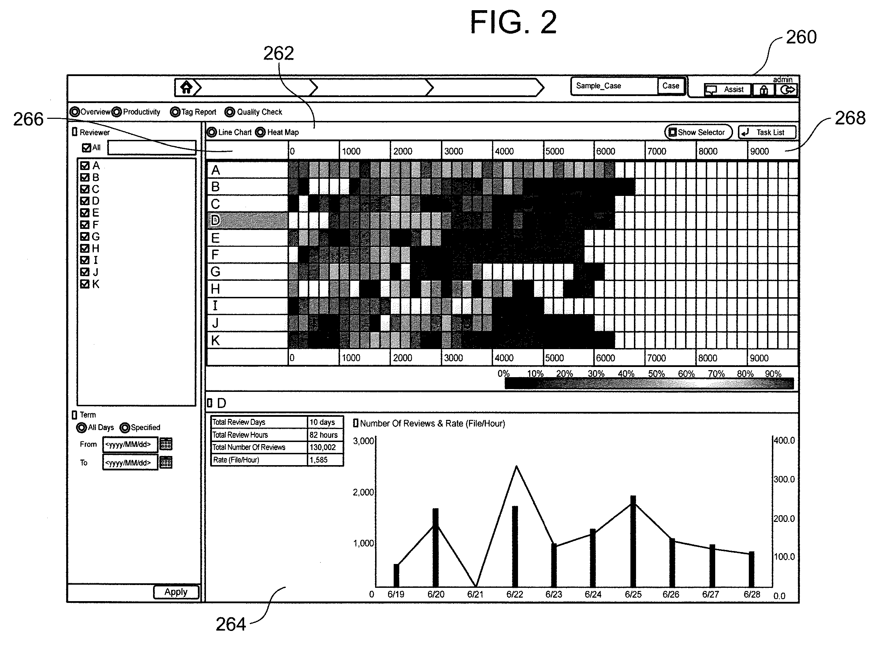

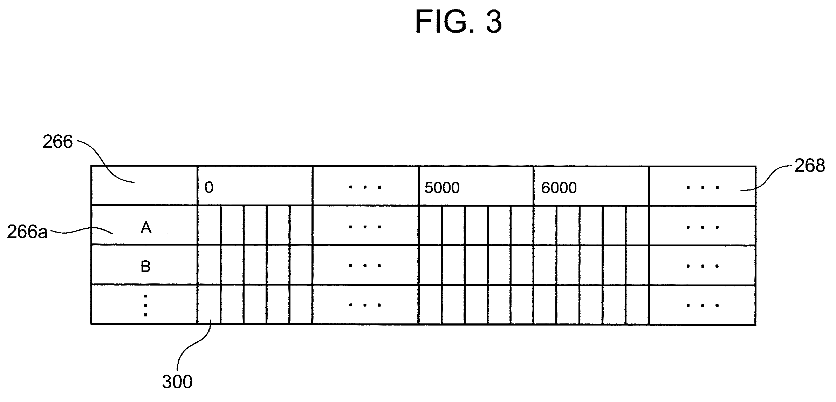

FIG. 2 shows an example of a display screen of the digital information analysis system according to the embodiment of the present invention. FIG. 3 schematically shows an outline of part of the display screen of the digital information analysis system according to the embodiment of the present invention.

A display screen 260 displayed on the display unit 24 under the control of the display control unit 22 has a display area 262 for displaying multiple blocks and the ratio associated with each predetermined range of relevance scores, respectively. The display area 262 includes a classification rate area 264 for showing classification rates, a classifier column 266 for showing the names or titles of multiple classifiers, and a relevance score column 268 for showing relevance scores. As an example, the digital information analysis system 1 has the relevance score column 268 having multiple blocks in each predetermined score range in the horizontal direction of the display area 262. Then, the digital information analysis system 1 has the classifier column 266 for showing classifiers in the vertical direction of the display area 262. Thus, the relevance score column 268 is provided for each classifier.

As an example, referring to FIG. 3, the display unit 24 of the digital information analysis system 1 displays a classifier name 266a of one classifier in the classifier column 266. The relevance score column 268 shows multiple blocks along one direction of the display unit 24 (the horizontal direction in the example of FIG. 3). Here, the display unit 24 arranges and displays multiple blocks in order of increasing relevance scores in each predetermined score range. In the example of FIG. 3, the display unit 24 arranges and displays the multiple blocks to increase the relevance scores in increments of 200 points from left to right.

Therefore, relevance scores having a predetermined score range are associated with each block. Specifically, when a score range of relevance scores not less than x points and less than x+y points (where x and y are positive numbers of 0 or more, and x≠y) is associated with one block, a score range of relevance scores not less than x+y points and less than x+y+z points (where z is a positive number of 0 or more, and y≠z) is associated with another block adjacent to the one block. For example, when relevance scores not less than 0 points and less than 200 points are associated with one block, relevance scores not less than 200 points and less than 400 points are associated with a block adjacent to the one block. In other words, the score range stays constant in this example.

When receiving information indicative of a ratio from the ratio calculation unit 18 in association with the classifier identifier, the display control unit 22 controls the display unit 24 to display a block 300 in the relevance score column 268 corresponding to relevance scores of digital information used in calculating the ratio for a classifier identified by the classifier identifier in the classifier column 266 by changing the hue, brightness, or saturation of the block 300. For example, the display control unit 22 displays the block by gradually changing the color of the block from a cold color (e.g., blue) to a warm color (e.g., red) as the ratio calculated by the ratio calculation unit 18 increases from 0% to 100%. The digital information having a high relevance score is digital information having high relevance to the predetermined specific matter. Therefore, it is preferred that the color of a block corresponding to a high relevance score should be a warmer color as the relevance score becomes higher. Therefore, the good or bad of the classification accuracy of each classifier can be grasped at a glance by referring to the color of each block displayed on the display unit 24.

### (Outline of Processing Flow of Digital Information Analysis System)

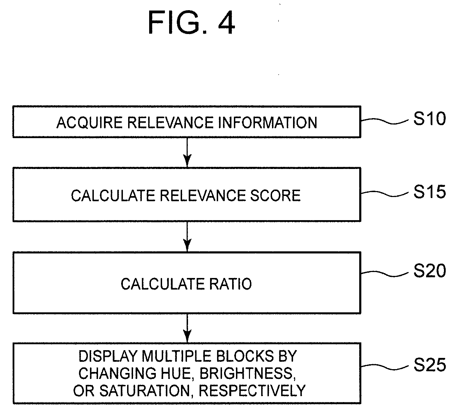

FIG. 4 shows an example of a processing flow of the digital information analysis system according to the embodiment of the present invention.

First, the relevance information acquiring unit 14 acquires relevance information attached through the input unit 10 to digital information acquired by the information acquiring unit 12 (step 10: step is abbreviated as "S" below). The relevance information acquiring unit 14 acquires relevance information in association with the classifier identifier for a classifier who has input the relevance information to the input unit 10. The relevance information acquiring unit 14 supplies the acquired relevance information to the ratio calculation unit 18. Further, the relevance score calculating unit 16 calculates a relevance score of the digital information acquired by the information acquiring unit 12 (S15). The relevance score calculating unit 16 supplies the calculated relevance score to the ratio calculation unit 18.

The ratio calculation unit 18 measures the total number of pieces of digital information having relevance scores included in the predetermined score range of relevance scores. Then, the ratio calculation unit 18 measures the number of pieces of digital information as digital information having relevance scores included in the score range and associated with the first relevance information. Next, the ratio calculation unit 18 calculates a ratio by dividing the number of pieces of digital information associated with the first relevance information by the total number measured (S20). The ratio calculation unit 18 calculates a ratio for each of multiple score ranges, respectively. The ratio calculation unit 18 supplies information indicative of the calculated ratio to the display control unit 22.

The display control unit 22 displays the multiple blocks on the display unit 24 by changing the hue, brightness, or saturation thereof based on the information on the ratios received from the ratio calculation unit 18, respectively (S25). The display control unit 22 displays the multiple blocks for each of the multiple classifiers, respectively.

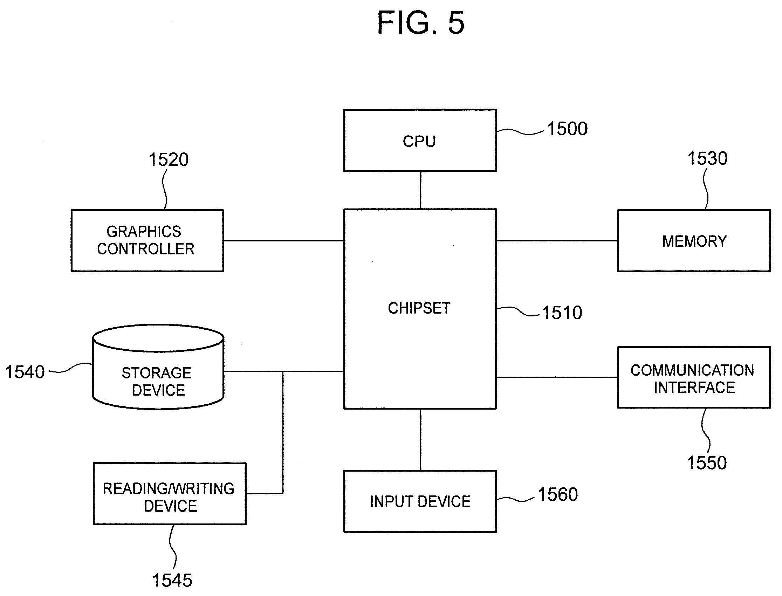

FIG. 5 shows an example of the hardware configuration of the digital information analysis system according to the embodiment of the present invention.

The digital information analysis system 1 according to the embodiment includes a CPU 1500, a graphics controller 1520, a memory 1530 such as a Random Access Memory (RAM), a Read-Only Memory (ROM) and/or a flash ROM, a storage device 1540 for storing data, a reading/writing device 1545 for reading data from a recording medium and/or writing data to a recording medium, an input device 1560 for inputting data, a communication interface 1550 for transmitting and receiving data to and from external communication devices, and a chipset 1510 for connecting the CPU 1500, the graphics controller 1520, the memory 1530, the storage device 1540, the reading/writing device 1545, the input device 1560, and the communication interface 1550 to be communicable with one another.

The chipset 1510 interconnects the memory 1530, the CPU 1500 accessing the memory 1530 to perform predetermined processing, and the graphics controller 1520 for controlling the display of an external display device to ensure the delivery of data among respective components. The CPU 1500 operates based on a program stored in the memory 1530 to control each component. The graphics controller 1520 displays images on a predetermined display device based on image data temporarily accumulated in a buffer provided in the memory 1530.

Further, the chipset 1510 connects the storage device 1540, the reading/writing device 1545, and the communication interface 1550. The storage device 1540 stores programs and data used by the CPU 1500 in the digital information analysis system 1. The storage device 1540 is, for example, a flash memory. The reading/writing device 1545 reads a program and/or data from a storage medium storing the program and/or data, and stores the read program and/or data in the storage device 1540. The reading/writing device 1545 is, for example, acquires a predetermined program from a server on the Internet through the communication interface 1550, and stores the acquired program in the storage device 1540.

The communication interface 1550 exchanges data with external devices through a communication network. Further, when the communication network is down, the communication interface 1550 can exchange data with the external devices not through the communication network. Then, the input device 1560 such as a keyboard, a tablet, or a mouse is connected to the chipset 1510 through a predetermined interface.

A digital information analysis program for the digital information analysis system 1 to be stored in the storage device 1540 is provided to the storage device 1540 through a communication network such as the Internet, or a recording medium such as a magnetic recording medium or an optical recording medium. Then, the digital information analysis program for the digital information analysis system 1 stored in the storage device 1540 is executed by the CPU 1500.

The digital information analysis program executed by the digital information analysis system 1 according to the embodiment works with the CPU 1500 to cause the digital information analysis system 1 to function as the input unit 10, the information acquiring unit 12, the relevance information acquiring unit 14, the relevance score calculating unit 16, the ratio calculation unit 18, the attaching-time measurement unit 20, the display control unit 22, the display unit 24, and the block selection unit 26 described from FIG. 1 to FIG. 4.

### (Effects of Embodiment)

The digital information analysis system 1 according to the embodiment can provide a map display (e.g., heat map display) of the classification accuracy of each classifier so that the accuracy of multiple classifiers, i.e. whether proper relevance information is attached to digital information can be grasped at a glance. Then, the digital information analysis system 1 can change the display state of blocks according to the magnitude of the relevance score based on the fact that digital information has higher relevance to the predetermined specific matter as the relevance score of the digital information becomes higher. In other words, according to the digital information analysis system 1 according to the embodiment, the color of a block can be changed and displayed according to the ratio so that the classification accuracy of digital information of each classifier can be grasped at a glance merely by referring to the color of each block of relevance scores. Thus, according to the digital information analysis system 1, information for improving classification accuracy can be provided to the classifier since the classification accuracy of digital information of each classifier can be visually displayed, information for improving classification accuracy can be provided to the classifier.

Further, since the digital information analysis system 1 displays the rate of one classifier to attach relevance information to digital information in the classification rate area 264, the classification rate of the classifier can be grasped at a glance together with the classification accuracy of the classifier. Therefore, for example, even when the classification accuracy of one classifier is high, the digital information analysis system 1 can grasp other characteristics of the classifier such as a slow classification rate.

While the embodiment of the present invention has been described, the aforementioned embodiment is not intended to limit the invention according to the scope of claims for patent. It should also be noted that all the combinations of the features described in the embodiment are not necessarily essential to the means for solving the problems. The technical elements in the aforementioned embodiment may be applied independently or can be applied in the form of being divided into multiple components such as program components and hardware components.

### Description of Reference Numerals

- 1: digital information analysis system
- 2: information processing apparatus
- 10: input unit
- 12: information acquiring unit
- 14: relevance information acquiring unit
- 16: relevance score calculating unit
- 18: ratio calculation unit
- 20: attaching-time measurement unit
- 22: display control unit
- 24: display unit
- 26: block selection unit
- 260: display screen
- 262: display area
- 264: classification rate area
- 266: classifier column
- 266a: classifier name
- 268: relevance score column
- 300: block
- 1500: CPU
- 1510: chipset
- 1520: graphics controller
- 1530: memory
- 1540: storage device
- 1545: reading/writing device
- 1550: communication interface
- 1560: input device

## Claims

1. A digital information analysis system comprising:
a relevance information acquiring unit for acquiring relevance information attached by a classifier to each of a plurality of pieces of digital information and indicative of relevance between the digital information and a predetermined specific matter;
a relevance score calculating unit for calculating, for each of the plurality of pieces of digital information, a relevance score determined according to relevance between each of the plurality of pieces of digital information and the predetermined specific matter;
a ratio calculation unit for calculating, for each predetermined range of relevance scores, a ratio of the number of pieces of relevance information, attached to the digital information included in the range, to the total number of pieces of digital information having the relevance scores included in each range; and
a display unit for displaying a plurality of blocks associated with each range by changing hue, brightness, or saturation based on the ratio.

2. The digital information analysis system according to claim 1, wherein
the relevance information includes first relevance information indicating that the digital information and the predetermined specific matter have relevance to each other, and second relevance information indicating that the digital information and the predetermined specific matter have no relevance to each other, and
the ratio calculation unit calculates the ratio based on the number of pieces of first relevance information.

3. The digital information analysis system according to claim 1 or 2, wherein
the relevance information acquiring unit acquires the relevance information in association with a classifier identifier for identifying the classifier, and
the display unit displays the plurality of blocks for each classifier identified by the classifier identifier.

4. The digital information analysis system according to claim 3, further comprising
an attaching-time measurement unit for measuring a time required for attaching the relevance information to one piece of digital information,
wherein the display unit displays a classification rate calculated from the time for each classifier identified by the classifier identifier.

5. The digital information analysis system according to any one of claims 1 to 4, further comprising
a block selection unit for selecting any of the plurality of blocks,
wherein the display unit displays the digital information having the relevance scores included in the range corresponding to the block selected by the block selection unit.

6. A digital information analysis method comprising:
a relevance information acquiring step of acquiring relevance information attached by a classifier to each of a plurality of pieces of digital information and indicative of relevance between the digital information and a predetermined specific matter;
a relevance score calculating step of calculating, for each of the plurality of pieces of digital information, a relevance score determined according to relevance between each of the plurality of pieces of digital information and the predetermined specific matter;
a ratio calculation step of calculating, for each predetermined range of relevance scores, a ratio of the number of pieces of relevance information, attached to the digital information included in the range, to the total number of pieces of digital information having the relevance scores included in each range; and
a display step of displaying a plurality of blocks associated with each range by changing hue, brightness, or saturation based on the ratio.

7. A digital information analysis program for causing a computer to realize:
a relevance information acquiring function of acquiring relevance information attached by a classifier to each of a plurality of pieces of digital information and indicative of relevance between the digital information and a predetermined specific matter;
a relevance score calculating function of calculating, for each of the plurality of pieces of digital information, a relevance score determined according to relevance between each of the plurality of pieces of digital information and the predetermined specific matter;
a ratio calculation function of calculating, for each predetermined range of relevance scores, a ratio of the number of pieces of relevance information, attached to the digital information included in the range, to the total number of pieces of digital information having the relevance scores included in each range; and
a display function of displaying a plurality of blocks associated with each range by changing hue, brightness, or saturation based on the ratio.
